(19) Europäisches Patentamt
European Patent Office
Office européen des brevets

(11) Veröffentlichungsnummer: **0 054 725**
**A1**

(12) # EUROPÄISCHE PATENTANMELDUNG

(21) Anmeldenummer: **81109352.5**

(22) Anmeldetag: **30.10.81**

(51) Int. Cl.³: **B 01 D 19/04**, C 11 D 3/00

(30) Priorität: **19.12.80 DE 3048125**

(43) Veröffentlichungstag der Anmeldung: **30.06.82**
**Patentblatt 82/26**

(84) Benannte Vertragsstaaten: **AT BE CH DE FR GB IT LI LU NL SE**

(71) Anmelder: **Henkel Kommanditgesellschaft auf Aktien,**
**Postfach 1100 Henkelstrasse 67,**
**D-4000 Düsseldorf 1 (DE)**

(72) Erfinder: **Hempel, Hans-Ulrich, Dr., Wiesegrund 5,**
**D-5063 Overath/Vilkerath (DE)**
Erfinder: **Klüppel, Hans-Jürgen, Dr., Begonienstrasse 7,**
**D-4000 Düsseldorf (DE)**
Erfinder: **Schmadel, Edmund, Dr., Hüschrath 9,**
**D-5653 Leichlingen 1 (DE)**
Erfinder: **Voignandt, Peter, Dr., Zwickauer Strasse 37,**
**D-4000 Düsseldorf-Vennhausen (DE)**

(54) **Verwendung von Polysiloxan-Fettsäurederivaten als Entschäumer in wässrigen Systemen.**

(57) Als Antischaummittel in wäßrigen Systemen werden Hydrolyseprodukte von Polysiloxan-Fettsäurederivaten der Formel (I) verwendet, die bei 100–200 °C aus Fettsäureestern mit einer Doppelbindung im Fettsäure- oder Alkoholrest durch Umsetzung mit Trichlorsilan, anschließende Hydrolyse und weitere Behandlung mit 1–10% feinverteilter, ggf. hydrophobierter Kieselsäure erhalten wurden.

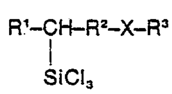 (I)

$R^1$, $R^3$ = Alkylreste, $R^3$ = Alkylenreste, wobei $R^1 + R^2 + R^3$ insgesamt 15–35 C-Atome enthalten

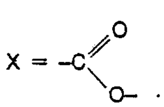

In Wasch- und Reinigungsmitteln werden die Mittel in Mengen von 0,05–1 Gew.-% eingesetzt, wobei sie bevorzugt an eine pulverförmige bis körnige, tensidfreie Trägersubstanz adsorbiert sind, die aus einem sprühgetrockneten bzw. granulierten Gemisch von mindestens 2 wasserlöslichen Salzen aus der Klasse der Polyphosphate, Silikate, Carbonate und Sulfate des Natriums besteht. Dadurch behält der Entschäumer beim Vermischen mit anderen Waschmittelbestandteilen und beim Lagern des Produktes seine volle Aktivität.

EP 0 054 725 A1

4000 Düsseldorf, den 3. September 1981
Henkelstraße 67

HENKEL KGaA
ZR-FE/Patente
Dr. Wa/St

P a t e n t a n m e l d u n g

D 5874 EP

"Verwendung von Polysiloxan-Fettsäurederivaten als Entschäumer in wäßrigen Systemen"

Gegenstand der Erfindung ist die Verwendung von bestimmten Fettsäurederivaten, die mit feinverteilter Kieselsäure behandelt wurden, als Antischaummittel in wässrigen Systemen, vorzugsweise in Reinigungsmitteln.

Schaumbekämpfung und -verhütung spielen bei zahlreichen technischen Vorgängen eine wichtige Rolle. Unerwünschte Schaumbildungen können die Durchführbarkeit eines Verfahrens vollständig in Frage stellen und gewisse Produkte unbrauchbar machen. Die Ursache für die Schaumbildung in Flüssigkeiten, Lösungen und Flüssigkeitsgemischen, in wässrigen, nicht-wässrigen oder gemischten Systemen sind recht verschiedenartig. Auf jeden Fall ist der besondere Zustand der Grenzschicht flüssig/gasförmig von wesentlicher Bedeutung. Im einzelnen spielen jedoch offensichtlich zahlreiche Faktoren eine Rolle, so daß nur in begrenztem Umfang vorausgesagt werden kann, inwieweit bestimmte Verbindungen als Schaumstabilisatoren oder Antischaummittel wirksam sind. Als Entschäumer in wässrigen Systemen, insbesondere Reinigungsmittel, hat man bereits Polysiloxane eingesetzt, wobei sich speziell Dimethylpolysiloxane bewährt haben. Es ist jedoch nicht in allen Fällen zweckmäßig, derartige Verbindungen zu verwenden, da sie teilweise auf die Oberfläche des zu behandelnden Gutes aufziehen, was nicht immer erwünscht ist. Auch ist

...

die Herstellung derartiger Produkte relativ aufwendig. Man hat daher auch schon Fettsäurederivate und insbesondere langkettige Fettsäuren wie Behensäure oder deren Salze als Antischaummittel verwendet. Jedoch ist die Wirksamkeit nicht immer hinreichend.

Es wurde nun gefunden, daß man als Antischaummittel in wässrigen Systemen, vorzugsweise in Reinigungsmitteln, mit gutem Erfolg Hydrolyseprodukte von Fettsäurederivaten der Formel

$$R_1 - \underset{\displaystyle SiCl_3}{\underset{|}{CH}} - R_2 - X - R_3 \qquad (I)$$

worin $R_1$ und $R_3$ Alkylreste und $R_2$ einen Alkylenrest mit insgesamt 15 bis 35 C-Atomen und X die Gruppe

$$-C{\lesssim}^{O}_{O}-$$

darstellen, die bei erhöhter Temperatur von 100 bis 200 °C mit 1 bis 10 % feinverteilter, gegebenenfalls hydrophobierter Kieselsäure behandelt wurden, verwenden kann.

Die zur Verwendung gelangenden Fettsäurederivate können in an sich bekannter Weise erhalten werden, indem zunächst die entsprechenden Fettsäureester, die eine Doppelbindung im Fettsäure- oder Alkoholrest enthalten, mit Trichlorsilan umgesetzt werden. Geeignet sind zum Beispiel Ester aus ungesättigten $C_3 - C_{22}$ -Carbonsäuren, wie Acryl-, Croton-, Undecylen-, Öl-, Elaidin- und Erucasäure mit gesättigten Alkoholen, wobei die Gesamtzahl der C-Atome 16 bis 36 betragen soll. Weiterhin kommen Ester ungesättigter Alkohole, wie Allyl-, Undecylen-, Hexadecylen-, Octadecylen und Eicosenylalkohol mit gesättigten

...

Fettsäuren in Frage, die ebenfalls insgesamt 16 bis 36 C-Atomen aufweisen. Als besonders geeignet haben sich die Ester der Öl-, Elaidin- und Erucasäure mit gesättigten $C_1$-$C_8$-Alkoholen erwiesen, wie Ölsäuremethylester, Erucasäuremethylester, Ölsäurebutylester und Ölsäureisooctylester. Die anfallenden sililierten Fettsäureester werden anschließend hydrolisiert. Je nach der Wassermenge erhält man mehr oder weniger viskose Öle; vorzugsweise wird die Hydrolyse mit etwa 1,5 Mol $H_2O$ pro Mol Trichlorsilanderivat durchgeführt. Danach erfolgt bei erhöhter Temperatur von 100 bis 200 °C eine Behandlung des Hydrolysenproduktes mit 1 bis 10 Gewichtsprozent fein verteilter Kieselsäure, insbesondere pyrogener Kieselsäure. Die Teilchengröße der Kieselsäure liegt ungefähr im Bereich von 5 bis 50 μ. Die Oberflächen betragen etwa 100 bis 350 $m^2/g$.

Es hat sich als zweckmäßig erwiesen, nach dem Eintragen der fein verteilten, gegebenenfalls hydrophobierten Kieselsäure noch eine Zeit lang bei der genannten Temperatur nachzurühren. Hydrophobierte Kieselsäure ist beispielsweise aus der DE-AS 16 19 859 bekannt.

Die so erhaltenen Produkte sind vorzüglich als Antischaummittel in üblichen Waschmitteln geeignet. Dabei werden sie im allgemeinen in Konzentrationen von 0,01 bis 2,5, vorzugsweise 0,05 bis 1 %, bezogen auf das Wasch- beziehungsweise Reinigungsmittel, angewandt.

Der erfindungsgemäß zu verwendende Entschäumer wird vorzugsweise an einer pulverförmigen Trägersubstanz adsorbiert und in dieser Form dem vorzugsweise pulverförmigen bis körnigen Wasch- und Reinigungsmittel zugemischt.

...

Diese Art des Einbringens hat den Vorteil, daß der Entschäumer bei dem Vermischen mit den übrigen Bestandteilen des Waschmittels sowie während der Lagerung der Gemische seine volle Aktivität beibehält. Beim Einbringen in einen Waschmittelslurry und Sprühtrocknen beziehungsweise beim einfachen Aufmischen auf tensidhaltige Waschmittelkörner muß infolge von Wechselwirkungen mit oberflächenaktiven Substanzen mit einem teilweisen Wirkungsverlust gerechnet werden.

Geeignete Trägersubstanzen sind in Waschmitteln üblicherweise verwendete anorganische, wasserlösliche Buildersalze, wie Polyphosphate, Silikate, Carbonate und Sulfate des Natriums sowie deren Gemische, die durch Sprühtrocknung aus wässrigen Lösungen oder Granulierung eine poröse, körnige Struktur aufweisen und vorzugsweise frei von Tensiden sind. Besonders geeignet sind Gemische aus 2 oder mehr der genannten Salze, so zum Beispiel solche aus 25 bis 97 Gewichtsprozent Natriumtripolyphosphat oder 25 bis 97 Gewichtsprozent Natriumsulfat und 75 bis 3 Gewichtsprozent Natriumsilikat, in denen das Tripolyphosphat vorzugsweise als Hexahydrat vorliegt und das Natriumsilikat aus einem solchen der Zusammensetzung $Na_2O : SiO_2 = 1 : 1,5$ bis $1 : 3$ besteht. Als besonders geeignet hat sich ein durch Heißsprühtrocknung hergestelltes, granulares Salzgemisch aus 7 bis 12 Gewichtsprozent Natriumsilikat und 93 bis 98 Gewichtsprozent einer Mischung von Natriumtripolyphosphat mit Natriumsulfat im Gewichtsverhältnis 5 : 1 bis 1 : 5 erwiesen.

Das Aufbringen des mit Kieselsäure behandelten Polysiloxan-Fettsäurederivates auf die Trägersubstanz kann beispielsweise durch Dispergieren des Entschäumers in der

...

zum Versprühen bestimmten wässrigen Lösung erfolgen, wobei auch nichttensidische Dispergiermittel, wie Carboxymethylcellulose, Methylcellulose oder ähnliche hochmolekulare Verbindungen zwecks Stabilisierung der Dispersion in Anteilen von etwa 0,1 bis 5 Gewichtsprozent zugesetzt werden können. Der Entschäumer kann aber auch nach dem Versprühen der Trägersubstanz nachträglich daran adsorbiert werden, beispielsweise durch Aufsprühen beziehungsweise Aufmischen auf das bewegte Trägermaterial. Das Gewichtsverhältnis von Entschäumer zu Trägersubstanz (berechnet als wasserfreies Salz) beträgt zweckmäßigerweise 1 : 50 bis 1 : 6, insbesondere 1 : 25 bis 1 : 8.

Die mit dem Entschäumer beladene Trägersubstanz (im folgenden Pulverkomponente A genannt) weist ein Schüttgewicht von 450 bis 700, vorzugsweise von 500 bis 650 g/l auf. Es liegt damit in der gleichen Größenordnung wie das Schüttgewicht sprühgetrockneter Waschmittelpulver, weshalb die Pulvergemische beim Transport und der Lagerung sich nicht entmischen können.

Die Pulverkomponente A wird mit weiteren pulverförmigen bis körnigen Waschmittelbestandteilen in an sich bekannter Weise vermischt, wobei die Mengenverhältnisse so bemessen werden, daß - je nach Stärke des gewünschten Effektes - 0,01 bis 0,5, vorzugsweise 0,05 bis 0,2 Gewichtsprozent Polysiloxan-Kieselsäuregemisch im Waschmittel enthalten sind.

Die Tenside und Gerüstsalze enthaltende Waschmittelkomponente (im folgenden Pulverkomponente B genannt) soll eine Korngröße von 0,05 bis 2,5 mm, vorzugsweise von 0,1 bis 1,6 mm aufweisen. Sie enthält mindestens ein anionisches,

...

nichtionisches oder zwitterionisches Tensid, Gerüstsalze sowie sonstige, nichtbleichende Waschmittelbestandteile, wozu Waschalkalien, Vergrauungsinhibitoren, optische Aufheller, Stabilisatoren, Neutralsalze und Farbstoffe zählen, nicht jedoch Perverbindungen beziehungsweise aktivchlorhaltige Bleichmittel, Bleichaktivatoren und Enzyme, die unter den Bedingungen einer Heißsprühtrocknung nicht beständig sind.

Zur Herstellung der Komponente (B) geeignete anionische Tenside sind solche vom Sulfonat- oder Sulfattyp, insbesondere Alkylbenzolsulfonate, Olefinsulfonate, Alkylsulfonate und $\alpha$-Sulfofettsäureester, primäre Alkylsulfate sowie die Sulfate von ethoxylierten, 2 bis 3 Glykolethergruppen aufweisenden höhermolekularen Alkoholen. In Frage kommen ferner Alkaliseifen von Fettsäuren natürlichen oder synthetischen Ursprungs, zum Beispiel die Natriumseifen von Cocos-, Palmkern- oder Talgfettsäuren. Die anionischen Tenside liegen vorzugsweise in Form der Natriumsalze vor. Sofern die genannten anionischen und zwitterionischen Verbindungen einen aliphaitschen Kohlenwasserstoffrest besitzen, soll dieser bevorzugt geradkettig sein und 8 bis 22, vorzugsweise 12 bis 18 Kohlenstoffatome aufweisen. In den Verbindungen mit einem araliphatischen Kohlenwasserstoffrest enthalten die vorzugsweise unverzweigten Alkylketten 6 bis 16, insbesondere 10 bis 14 Kohlenstoffatome.

Geeignete nichtionische Tenside sind insbesondere Ethoxylierungsprodukte von gesättigten oder einfach ungesättigten aliphatischen primären Alkoholen mit 12 bis 24, vorzugsweise 12 bis 18 Kohlenstoffatomen und 3 bis 20, insbesondere 4 bis 15 Ethylenglykolethergruppen. Geeignete

...

Alkohole, von denen sich die vorliegenden Ethoxylierungsprodukte ableiten, sind beispielsweise solche natürlichen Ursprungs, wie Cocos- oder Talgfettalkohole beziehungsweise Oleylalkohol, ferner Oxoalkohole oder durch Ethylenpolymerisation gewonnene Synthesealkohole.

Weitere geeignete nichtionische Tenside sind Ethoxylierungsprodukte von sekundären Alkoholen, vicinalen Diolen und Aminoalkoholen mit jeweils 12 bis 18 Kohlenstoffatomen sowie von Alkylphenolen mit 6 bis 12 Kohlenstoffatomen im Alkylrest, wobei die Zahl der Glykolethergruppen ebenfalls 3 bis 20, vorzugsweise 4 bis 15 beträgt. Die vorstehend genannten ethoxylierten Alkohole, Aminoalkohole und Alkylphenole können auch ganz oder teilweise durch solche ersetzt sein, bei deren Herstellung mit 0,5 bis 3 Mol Propylenoxid pro Mol Ausgangsverbindung und erst in 2. Stufe die in Aussicht genommene Menge an Ethylenoxid angelagert wird.

Gegebenenfalls können auch solche nichtionischen Tenside anwesend sein, die sich von den vorgenannten Verbindungen ableiten und die Ethylenglykol- als auch Propylenglykolethergruppen in anderer Reihenfolge aufweisen, beispielsweise Alkohole mit 10 bis 30 Ethylenglykolethergruppen und 3 bis 30 Propylenglykolethergruppen; ferner Ethoxylierungsprodukte von Mercaptanen, Fettsäureamiden und Fettsäuren. Brauchbar sind auch die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten. Auch nichtionische Verbindungen vom Typ der Aminoxide und Sulfoxide, die gegebenenfalls auch ethoxyliert sein können, sind verwendbar.

...

Geeignete Gerüstsubstanzen sind die Polymerphosphate, Carbonate, Silikate und Sulfate des Kaliums und insbesondere des Natriums, wobei die Silikate ein Verhältnis von $SiO_2$ zu $Na_2O$ von 1 : 1 bis 3,5 : 1 aufweisen. Als Polymerphosphat kommt insbesondere das Pentanatriumtriphosphat in Frage, das im Gemisch mit seinen Hydrolyseprodukten, den Mono- und Diphosphaten, sowie höherkondensierten Phosphaten, z.B. den Tetraphosphaten, vorliegen kann. Brauchbar sind ferner zum Kationenaustausch befähigte, wasserhaltige Alumosilikate des Kaliums oder insbesondere des Natriums der allgemeinen Formel $(Na_2O)_x \cdot Al_2O_3 \cdot (SiO_2)_y \cdot (H_2O)_z$ mit x = 0,9 bis 1,5, y = 1,3 bis 4,0 und z = 1 bis 6.

Diese Alumosilikate weisen allgemein eine Korngröße von 0,1 bis 20$\mu$ auf und sind vorzugsweise kristallin.

Zu den Gerüstsalzen zählen ferner Salze von komplexierend wirkenden Aminopolycarbonsäuren, insbesondere Alkalisalze der Nitrilotriessigsäure und Ethylendiaminotetraessigsäure. Geeignet sind ferner die höheren Homologen der genannten Aminopolycarbonsäuren. Auch Salze stickstofffreier, mit Calciumionen Komplexsalze bildender Polycarbonsäuren, wozu auch Carboxylgruppen enthaltende Polymerisate zählen, sind

...

geeignet. Beispiele sind Citronensäure, Weinsäure, Benzolhexacarbonsäure und Tetrahydrofurantetracarbonsäure. Auch Carboxymethylethergruppen enthaltende Polycarbonsäuren sind brauchbar, wie 2,2'-Oxydibernsteinsäure sowie mit Glykolsäure teilweise oder vollständig veretherte mehrwertige Alkohole oder Hydroxycarbonsäuren, beispielsweise Triscarboxymethylglycerin, Biscarboxymethylglycerinsäure, Carboxymethyl-oxybernsteinsäure und carboxymethylierte beziehungsweise oxydierte Polysaccharide. Weiterhin eignen sich die polymeren Carbonsäuren mit einem Molekulargewicht von mindestens 350 in Form der wasserlöslichen Natrium- oder Kaliumsalze, wie Polyacrylsäure, Polymethacrylsäure, Polyα-hydroxyacrylsäure, Polymaleinsäure, Polyitaconsäure, Polymesaconsäure, Polybutentricarbonsäure sowie die Copolymerisate der entsprechenden monomeren Carbonsäuren untereinander oder mit ethylenisch ungesättigten Verbindungen wie Ethylen, Propylen, Isobutylen, Vinylmethylether oder Furan.

Weiterhin können komplexierend wirkende polyphosphonsaure Salze anwesend sein, zum Beispiel die Alkalisalze von Aminopolyphosphonsäuren, insbesondere Aminotri-(methylenphosphonsäure), 1-Hydroxyethan-1,1-diphosphonsäure, Phenylhydroxymethandiphosphonsäure, Methylendiphosphonsäure sowie Salze der höheren Homologen der genannten Polyphosphonsäuren. Auch Gemische der vorgenannten Komplexierungsmittel sind verwendbar.

...

Zu den sonstigen Bestandteilen, die in der Komponente (B) enthalten sein können, zählen Waschalkalien, Neutralsalze, Vergrauungsinhibitoren, optische Aufheller, Stabilisatoren wie Magnesiumsilikat, avivierend wirkende Stoffe sowie Farbstoffe, ferner Zusätze, welche die Versprühbarkeit verbessern, zum Beispiel Alkalisalze der Toluol-, Xylol- oder Cumolsulfonsäure.

Geeignete Waschalkalien sind Alkalicarbonate, -bicarbonate, -borate und -silikate mit einem $Na_2O : SiO_2$-Verhältnis von 1 : 1 bis 1 : 3,5. Als Neutralsalze kommen Natriumsulfat und Natriumchlorid in Betracht.

Als Vergrauungsinhibitoren eignen sich insbesondere Carboxymethylcellulose sowie Cellulosemischether, die wechselnde Mengen an Carboxymethyl-, Methyl- und/oder Hydroxyethyl-, Hydroxypropyl- und Hydroxybutylgruppen aufweisen, insbesondere Methylhydroxypropylcellulose und Methylhydroxybutylcellulose, ferner kolloidal in Wasser lösliche Polymere beziehungsweise Copolymere des Vinylalkohols, Vinylpyrrolidons, Acrylamids und Acrylnitrils.

Geeignete optische Aufheller sind die Alkalisalze der 4,4-Bis(-2"-anilino-4"-morpholino-1,3,5-triazinyl-6"-amino)-stilben-2,2'-disulfonsäure oder gleichartig aufgebaute Verbindungen, die anstelle der Morpholinogruppe eine Diethanolaminogruppe, eine Methylaminogruppe oder eine ß-Methoxyethylaminogruppe tragen. Weiterhin kommen als Aufheller für Polyamidfasern solche vom Typ der Diarylpyrazoline in Frage, beispielsweise 1-(p-Sulfonamidophenyl)-3-(p-chlorphenyl)-$\Delta^2$-pyrazolin sowie gleichartig aufgebaute Verbindungen, die anstelle der Sulfonamidogruppe eine Carboxymethyl- oder Acetylaminogruppe tragen. Brauchbar sind ferner substituierte Aminocumarine, zum Beispiel das 4-Methyl-7-dimethylamino- oder das 4-Methyl-7-diethylaminocumarin.

...

Weiterhin sind als Polyamidaufheller die Verbindungen 1-(2-Benzimidazolyl)-2-(1-hydroxyethyl-2-benzimidazolyl)-ethylen und 1-Ethyl-3-phenyl-7-diethylamino-carbostyryl brauchbar. Als Aufheller für Polyester- und Polyamidfasern sind die Verbindungen 2,5-Di-(2-benzoxazolyl)-thiophen, 2-(2-Benzoxazolyl)-naphto-[2,3-b]-thiophen und 1,2-Di-(5-methyl-2-benzoxazolyl)-ethylen geeignet. Weiterhin können Aufheller vom Typ der substituierten Diphenylstyryle anwesend sein. Auch Gemische der vorgenannten Aufheller können verwendet werden.

Eine gegebenenfalls anwesende weitere Pulverkomponente (C) enthält vorzugsweise eine Perverbindung, beispielsweise Natriumpercarbonat, insbesondere jedoch Natriumperborattetrahydrat.

Weiterhin können noch zusätzliche Pulverkomponenten anwesend sein, die beispielsweise Enzyme oder Bleichaktivatoren enthalten können. Zum Schutz gegen Zersetzung oder Wechselwirkungen mit den übrigen Pulverbestandteilen des Waschmittels können die Enzyme und Bleichaktivatoren mit in Wasser löslichen bzw. dispergierbaren Hüllsubstanzen überzogen sein.

Die Pulverkomponente (B) wird vorteilhaft durch Sprühtrocknung in bekannter Weise aus einem wäßrigen Slurry hergestellt. Derartige Sprühpulver weisen üblicherweise ein Litergewicht von 300 bis 600 g auf und neigen nach dem Vermischen mit der durch Versprühen hergestellten Komponente (A) nicht zu Entmischungen während des Abfüllens und beim Transport. Gegebenenfalls kann die Komponente (B) auch durch bekannte Granulierverfahren hergestellt werden.

...

Die Vereinigung der verschiedenen Pulverkomponenten erfolgt durch Vermischen in üblichen Mischvorrichtungen, die vorzugsweise kontinuierlich beziehungsweise nach dem Freifallprinzip arbeiten. Vor oder während des Mischprozesses können auch noch weitere Bestandteile, zum Beispiel Duftstoffe eingebracht beziehungsweise auf eine der Pulverkomponenten oder das Pulvergemisch aufgesprüht werden. Schließlich kann auch eine der Pulverkomponenten (B) oder (C), insbesondere jedoch das Natriumperborat (Komponente C) - wie in den Patentanmeldungen DE-OSS 27 48 970 und 27 53 680 beschrieben - mit nichtionischen Tensiden beaufschlagt sein, um das Einspülverhalten des Waschpulvers zu verbessern.

Die in der angegebenen Weise hergestellten pulverförmigen Waschmittel zeichnen sich durch ein günstiges Schaumverhalten aus. Von Vorteil ist, daß bei der Anwendung der Mittel keine Vergrauung der Gewebe beziehungsweise keine Beaufschlagung der Waschmaschinenteile mit einem nur sehr schwer entfernbaren Siloxanfilm eintritt. Der auf die Trägersubstanz aufgebrachte Entschäumer behält auch nach mehrmonatlicher Lagerung der Pulvergemische seine volle Wirkung bei.

...

Die nach dem angegebenen Verfahren hergestellten Waschmittel können demnach die folgende Zusammensetzung aufweisen:

A) 1 Gewichtsteil einer körnigen Pulverkomponente, enthaltend

1 bis 15 Gewichtsprozent eines Gemisches aus Polysiloxan-Fettsäurederivat und Kieselsäure im Verhältnis 99 : 1 bis 9 : 1, das einem Sprühprodukt adsorbiert ist, enthaltend

5 bis 15 Gewichtsprozent Natriumsilikat der Zusammensetzung $Na_2O : SiO_2 = 1 : 1{,}5 - 1 : 3$, insbesondere 1 : 2,

30 bis 80 Gewichtsprozent Pentanatriumtripolyphosphat und/oder Natriumsulfat und/oder Natriumcarbonat

5 bis 20 Gewichtsprozent Wasser (einschließlich Kristallwasser),

B) 5 bis 80 Gewichtsteilen einer körnigen Pulverkomponente, enthaltend

10 bis 40 Gewichtsprozent mindestens eines anionischen, nichtionischen oder zwitterionischen Tensids,

40 bis 80 Gewichtsprozent mindestens eines Gerüstsalzes und

10 bis 50 Gewichtsprozent an sonstigen, nichtbleichenden Waschmittelbestandteilen,

C) 0 bis 30 Gewichtsteilen einer körnigen Pulverkomponente, enthaltend ein oxidativ wirkendes Bleichmittel,

wobei das Mischungsverhältnis der einzelnen Pulverkomponenten so bemessen ist, daß das Mittel insgesamt 0,01 bis 0,5 Gewichtsprozent an Polysiloxan enthält.

...

Beispiele

Ölsäuremethylester wird in bekannter Weise mit Trichlorsilan umgesetzt und das dabei entstandene Silan durch Destillation isoliert.

120 g des Produktes wurden in 500 ml Trichlorethylen mit 22 g Wasser versetzt und am Rückfluß erwärmt. Nach beendeter HCl-Entwicklung wurde mit 200 g Soda aufgekocht und abfiltriert und das Lösungsmittel im Vakuum abgezogen. Das anfallende ölförmige Hydrolysat wird bei einer Temperatur von etwa 150 °C mit 3 Gewichtsprozent fein verteilter Kieselsäure (Teilchengröße: 10 bis 15 µ) versetzt und noch 5 Stunden unter Stickstoff nachgerührt. Der so hergestellte Entschäumer zeigt bei 0,1 % Einsatz in üblichen Vollwaschmitteln ausgezeichnete schauminhibierende Eigenschaften.

Das Schaumverhalten wurde geprüft an einem Vollwaschmittel der nachstehenden Zusammensetzung (Angaben in Gewichtsprozent):

| | |
|---|---|
| 8,0 % | n-Dodecylbenzolsulfonat |
| 3,5 % | Seife (Talg : Cocos = 9 : 1) |
| 1,7 % | Talgalkohol + 5 EO |
| 1,6 % | Talgalkohol + 14 EO |
| 20,0 % | Na-Tripolyphosphat |
| 20,0 % | Natriumalumosilikat |
| 2,5 % | Na-Silikat ($Na_2O$ : $SiO_2$ = 1 : 3) |
| 1,7 % | Mg-Silikat |
| 0,2 % | EDTA |
| 0,7 % | Carboxymethylcellulose |
| 0,2 % | optischer Aufheller |
| 13,5 % | Na-Sulfat |
| 19,0 % | Na-Perborat |
| Rest | Wasser |

...

Die Prüfung wurde in einer handelsüblichen Waschmaschine mit horizontal angeordneter Trommel bei Temperaturen von 30°, 60° und 95 °C durchgeführt. Hierzu wurde die Maschine mit 3,5 kg sauberer Füllwäsche (Baumwolle) beschickt. Die Waschmittelkonzentration betrug 7,5 g und die Wasserhärte 16° dH. Die jeweilige Schaumhöhe wurde durch das Sichtglas der Fronttür kontrolliert und wie folgt benotet:

| | | |
|---|---|---|
| kein Schaum | = | 0 |
| 1/4 der Sichtglashöhe | = | 1 |
| 1/2 der Sichtglashöhe | = | 2 |
| 3/4 der Sichtglashöhe | = | 3 |
| 4/4 der Sichtglashöhe | = | 4 |
| Überschäumen | = | 5 |

Es wurden die Polysiloxan-Derivate folgender Fettsäuren verwendet:

$S_1$ Ölsäuremethylester
$S_2$ Ölsäurebutylester
$S_3$ Ölsäureisooctylester
$S_4$ Erucasäuremethylester
$S_5$ Fettsäureallylester aus hydrierter Palmkernfettsäure (im wesentlichen $C_{16}$-$C_{18}$-Fettsäure).

Die mit Kieselsäure umgesetzten Produkte wurden den Waschmitteln in Anteilen von 0,1 bis 0,3 Gewichtsprozent zugesetzt.

Die Ergebnisse sind in Tabelle I zusammengestellt.

...

| Beispiel | Entschäumer Gew.-% | Typ | Schaumhöhe bei 30° | 60° | 90°C |
|---|---|---|---|---|---|
| 1 | 0,1 | $S_1$ | 3 | 2 | 1 |
| 2 | 0,2 | $S_1$ | 2 | 1,5 | 1 |
| 3 | 0,3 | $S_1$ | 1,5 | 1 | 1 |
| 4 | 0,1 | $S_2$ | 3 | 1,5 | 1 |
| 5 | 0,2 | $S_2$ | 1,5 | 1,5 | 1 |
| 6 | 0,3 | $S_2$ | 1 | 1 | 1 |
| 7 | 0,1 | $S_3$ | 2 | 1,5 | 1 |
| 8 | 0,2 | $S_3$ | 1 | 1 | 0,5 |
| 9 | 0,3 | $S_3$ | 0,5 | 0,5 | 0,5 |
| 10 | 0,1 | $S_4$ | 2 | 1,5 | 1 |
| 11 | 0,2 | $S_4$ | 2 | 1 | 1 |
| 12 | 0,3 | $S_4$ | 1 | 1 | 1 |
| 13 | 0,1 | $S_5$ | 2 | 1,5 | 1 |
| 14 | 0,2 | $S_5$ | 2 | 1 | 1 |
| 15 | 0,3 | $S_5$ | 1 | 1 | 0,5 |

In einer zweiten Versuchsreihe wurden 60 gewichtsprozentige wässrige Lösungen, enthaltend Natriumtripolyphosphat, Natriumsulfat und Natriumsilikat ($Na_2O$ : $SiO_2$ = 1 : 2) sowie die mit $S_3$ und $S_4$ bezeichneten Entschäumer durch Sprühtrocknung (Lufttemperatur am Eingang 270 °C, am Ausgang 90 °C) sprühgetrocknet. Die Sprühprodukte enthielten:

37,5 % Na-Tripolyphosphat
33,5 % Na-Sulfat
12,0 % Na-Silikat
12,0 % Wasser
5,0 % Entschäumer.

...

Das Produkt wies eine mittlere Korngröße von 0,2 bis 0,4 mm auf, der Anteil mit einer Korngröße von über 1,6 mm betrug 0,1 Gewichtsprozent, der mit weniger als 0,1 mm 2 Gewichtsprozent. Die Grobanteile wurden ausgesiebt.

Von diesem Sprühprodukt (A) wurden jeweils 2 Gewichtsteile mit dem in Beispiel 1 - 15 verwendeten Pulvergemisch aus Waschpulver (B) und Natriumperborat (C) gleichmäßig vermischt. Der Gehalt der Aufmischung an Entschäumern betrug somit 0,1 Gewichtsprozent. Das Schaumverhalten wurde in der vorgenannten Weise unmittelbar nach dem Vermischen und nach 10-tägiger Lagerung bei 30 °C geprüft. Die Ergebnisse sind in Tabelle II zusammengestellt.

Tabelle II

| Beispiel | Entschäumer | Schaumhöhe nach Vermischen 30° | 60° | 95° | Schaumhöhe nach Lagerung 30° | 60° | 90 °C |
|---|---|---|---|---|---|---|---|
| 16 | $S_3$ | 2 | 1,5 | 1 | 2 | 1,5 | 1 |
| 17 | $S_4$ | 2 | 1,5 | 0,5 | 2 | 1,5 | 1 |

Die Aktivität des Entschäumers hatte nach der Lagerung nicht abgenommen.

...

Patentansprüche:

1. Verwendung von Polysiloxan-Fettsäurederivaten, bestehend aus Hydrolyseprodukten von Fettsäurederivaten der Formel

$$R_1 - \underset{\displaystyle SiCl_3}{\underset{|}{CH}} - R_2 - X - R_3 \qquad (I)$$

worin $R_1$ und $R_3$ Alkylreste und $R_2$ einen Alkylenrest mit insgesamt 15 bis 35 C-Atomen und X die Gruppe

$$-C\genfrac{}{}{0pt}{}{\!=O}{\!-O-}$$

darstellen, die bei erhöhter Temperatur von 100 bis 200 °C mit 1 bis 10 % feinverteilter, gegebenenfalls hydrophobierter Kieselsäure behandelt wurden, als Entschäumer in wäßrigen Systemen.

2. Verwendung der Polysiloxan-Fettsäurederivate nach Anspruch 1 in Wasch- und Reinigungsmitteln.

3. Verwendung der Polysiloxan-Fettsäurederivate nach den Ansprüchen 1 und 2 in Mengen von 0,05 bis 1 Gewichtsprozent, bezogen auf das Wasch- und Reinigungsmittel.

4. Verwendung der Polysiloxan-Fettsäurederivate nach den Ansprüchen 1 und 2, wobei diese an einer pulverförmigen bis körnigen, tensidfreien Trägersubstanz adsorbiert sind.

5. Verwendung nach Anspruch 4, wobei die Trägersubstanz aus einem sprühgetrockneten beziehungsweise granulierten Gemisch von mindestens 2 wasserlöslichen Salzen aus der Klasse der Polyphosphate, Silikate, Carbonate und Sulfate des Natriums besteht.

...

6. Verwendung nach den Ansprüchen 4 und 5, wobei die Trägersubstanz aus einem sprühgetrockneten Gemisch von 7 bis 12 Gewichtsprozent Natriumsilikat der Zusammensetzung $Na_2O : SiO_2 = 1 : 1,5 - 1 : 3$ und 93 bis 98 Gewichtsprozent einer Mischung aus Natriumtripolyphosphat und Natriumsulfat im Gewichtsverhältnis 5 : 1 bis 1 : 5 besteht.

Europäisches Patentamt

# EUROPÄISCHER RECHERCHENBERICHT

0054725
Nummer der Anmeldung

EP 81 10 9352.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - B - 1 052 614 (UNION CARBIDE CORP.)<br>* Anspruch 1 *<br>-- | 1 |
| A | DE - C - 1 067 003 (GENERAL ELECTRIC CO.)<br>* Anspruch 1 *<br>-- | 1 |
| A | DE - A - 2 241 171 (IMPERIAL CHEMICAL IND.)<br>* Ansprüche 1, 2 *<br>-- | 1 |
| A | CH - A5 - 571 881 (DOW CORNING CORP.)<br>* Anspruch 1, Unteranspruch 3 *<br>-- | 1 |
| A | US - A - 3 223 474 (S. NITZSCHE et al.)<br>* Spalte 3, Zeilen 69 bis 75 *<br>-- | 1 |
| A | US - A - 4 101 443 (M.R. ROSEN et al.)<br>* Anspruch 1 *<br>-- | 1 |
| A | DE - A - 2 232 262 (DOW CORNING LTD.)<br>* Ansprüche 1 bis 5 *<br>-- | 4-6 |
| A | DE - A1 - 2 909 757 (CIBA-GEIGY)<br>* Anspruch 1 *<br>-- | 4-6 |

./..

KLASSIFIKATION DER ANMELDUNG (Int. Cl.3)

B 01 D 19/04
C 11 D 3/00

RECHERCHIERTE SACHGEBIETE (Int. Cl.3)

B 01 B 1/04
B 01 D 19/04
C 07 F 7/08
C 11 D 3/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 22-02-1982 | KÜHN |

Europäisches Patentamt

**EUROPÄISCHER RECHERCHENBERICHT**

0054725

Nummer der Anmeldung

EP 81 10 9352.5



| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | KOLLOID-ZEITSCHRIFT & ZEITSCHRIFT FÜR POLYMERE, Band ~~23~~6, Nr. 1, Januar 1970, Leverkusen<br>W. NOLL et al. "Beiträge zur Grenzflächenchemie der Polyorganosiloxane. III"<br>Seiten 1 bis 19<br>* vollständiges Dokument *<br>---- | | |
| | | | RECHERCHIERTE SACHGEBIETE (Int. Cl.³) |

EPA Form 1503.2 06.78